(19) Europäisches Patentamt
European Patent Office
Office européen des brevets

(11) **EP 3 656 073 B1**

(12) **FASCICULE DE BREVET EUROPEEN**

(45) Date de publication et mention
de la délivrance du brevet:
**07.07.2021 Bulletin 2021/27**

(21) Numéro de dépôt: **18739890.4**

(22) Date de dépôt: **19.07.2018**

(51) Int Cl.:
*H04L 5/00* (2006.01)     *H04L 27/28* (2006.01)
*H04L 27/30* (2006.01)

(86) Numéro de dépôt international:
**PCT/EP2018/069693**

(87) Numéro de publication internationale:
**WO 2019/016342 (24.01.2019 Gazette 2019/04)**

(54) **PROCÉDÉ ET DISPOSITIF DE CODAGE ET DÉCODAGE DE DONNÉES DANS UN SIGNAL OFDM**

VERFAHREN UND VORRICHTUNG ZUR KODIERUNG UND DEKODIERUNG VON DATEN IN EINEM OFDM SIGNAL

METHOD AND APPARATUS FOR DATA ENCODING AND DECODING IN A OFDM SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.07.2017 FR 1756955**

(43) Date de publication de la demande:
**27.05.2020 Bulletin 2020/22**

(73) Titulaire: **Safran Electronics & Defense**
**92100 Boulogne-Billancourt (FR)**

(72) Inventeurs:
• **CHIODINI, Alain**
**92100 Boulogne-Billancourt (FR)**
• **WIDEMONT, Laurent**
**92100 Boulogne-Billancourt (FR)**

(74) Mandataire: **Regimbeau**
**20, rue de Chazelles**
**75847 Paris Cedex 17 (FR)**

(56) Documents cités:
**WO-A1-2014/184285     WO-A1-2016/186544**

**Description**

**DOMAINE DE L'INVENTION**

L'invention se rapporte au domaine des radiocommunications utilisant le codage de signaux numériques par répartition en fréquences orthogonales sous forme de multiples sous-porteuses (« Orthogonal Frequency-Division Multiplexing » en anglais, abrégé en OFDM).
La présente invention concerne plus particulièrement un procédé de codage de données dans un signal OFDM, un procédé de décodage de données préalablement codées dans un signal ODFM, un émetteur de signal OFDM et un récepteur de signal OFDM.

**ETAT DE LA TECHNIQUE**

Un signal OFDM classique comprend une pluralité de sous-porteuses dont les fréquences sont mutuellement orthogonales (afin de réduire autant que possible l'intervalle fréquentiel entre sous-porteuses consécutives dans le but d'accroître l'efficacité spectrale).
L'ensemble de ces sous-porteuses est typiquement divisé en deux sous-ensembles :

- un ensemble de M sous-porteuses utilisées pour l'estimation du canal de transmission (les phases portées par ces sous-porteuses sont connues du récepteur du signal),
- un ensemble de N sous-porteuses utilisées pour le transport de données (les données sont modulées à l'aide d'un schéma de modulation classique : BPSK, QPSK, 16-QAM, 64-QAM, etc.).

La quantité d'information brute transportée par un tel signal OFDM dépend du schéma de modulation utilisé : cette quantité est de B x N bits par paquet si, d'une façon générale, un schéma de modulation portant B bits par sous-porteuse est utilisé.
L'augmentation du débit de transmission est un objectif continu dans le domaine des radiocommunications. Pour augmenter la quantité d'information transportée par un signal OFDM, une solution connue consiste naturellement à augmenter le nombre de sous-porteuses.
Cependant, une telle augmentation n'est pas toujours possible. Le nombre de sous-porteuses peut en effet être limité par le dispositif émetteur du signal OFDM, le canal de transmission lui-même et le dispositif de réception.
Aussi, il a été proposé dans le document WO2014184285 ou dans le document WO 2016186544 un procédé de codage de données dans un signal OFDM, comprenant des étapes suivantes sur la base d'un ensemble prédéterminé de N fréquences orthogonales :

- on sélectionne un jeu de N-P fréquences dans cet ensemble, en fonction de la valeur d'une première donnée, de sorte que le jeu sélectionné représente un codage de la première donnée,
- pour chaque fréquence sélectionnée, on génère une première sous-porteuse à la fréquence sélectionnée et modulée d'après un schéma de modulation pour transporter au moins une deuxième donnée.

Parmi les N fréquences mises à disposition pour former le signal OFDM, seules N-P fréquences sont utilisées pour générer des sous-porteuses, les P autres fréquences étant laissées inutilisées. Le signal OFDM présente donc des « trous » fréquentiels laissés par l'émetteur en les fréquences inutilisées. Des informations sont classiquement transportées par les N-P sous-porteuses activées, selon le schéma de modulation prédéterminé. De plus, la sélection particulière opérée de N-P fréquences parmi les N disponible encode en elle-même une information supplémentaire. Pour décoder cette information supplémentaire, suite à la réception du signal OFDM la transportant, il convient de détecter les P fréquences qui n'ont pas utilisées pour générer le signal OFDM avant son émission, parmi celles de l'ensemble de N fréquences prédéterminées. Autrement dit, le récepteur doit détecter les trous fréquentiels laissés par l'émetteur dans le signal OFDM.
Toutefois, cette détection de trous est difficile à mettre en œuvre lorsque le signal OFDM a transité par un canal bruité : en effet, la présence de bruit dans le signal OFDM peut avoir pour conséquence que la non-utilisation d'une fréquence donnée dans le signal OFDM émis par l'émetteur devient incertaine pour le récepteur de ce signal.

**EXPOSE DE L'INVENTION**

Un but de l'invention est d'augmenter la quantité d'information transmise par un signal OFDM sans pour autant augmenter le nombre de sous-porteuses de ce signal OFDM, tout en faisant en sorte que ces informations soient plus faciles à décoder à leur réception.

Il est dès lors proposé, selon un premier aspect de l'invention, un procédé de codage de données dans un signal OFDM, selon la revendication 1.

Selon un deuxième aspect de l'invention, il est proposé un procédé de décodage de données préalablement codées dans un signal OFDM, selon la revendication 13.

Il est également proposé, selon d'autres aspects de la présente invention, un dispositif selon la revendication 12, et un dispositif selon la revendication 19.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 représente de façon schématique un système de communication de signaux OFDM selon un mode de réalisation de l'invention.
- La figure 2 est un organigramme d'étapes d'un procédé d'émission d'un signal OFDM selon un mode de réalisation de l'invention.
- La figure 3 est un organigramme d'étapes d'un procédé de réception d'un signal OFDM selon un mode de réalisation de l'invention.
- Les figures 4 à 7 illustrent de façon schématique des sous-porteuses de différents signaux OFDM générés par la mise en œuvre du procédé d'émission de la figure 2.
- La figure 8 illustre de façon schématique des sous-porteuses d'un signal OFDM généré par la mise en œuvre d'un procédé connu de l'état de la technique.
- Les figures 9 et 10 montrent chacune deux courbes : une courbe de gain d'information obtenu par la mise en œuvre d'un procédé selon un mode de réalisation de l'invention, et une courbe de gain d'information obtenu par la mise en œuvre d'un procédé connu de l'état de la technique

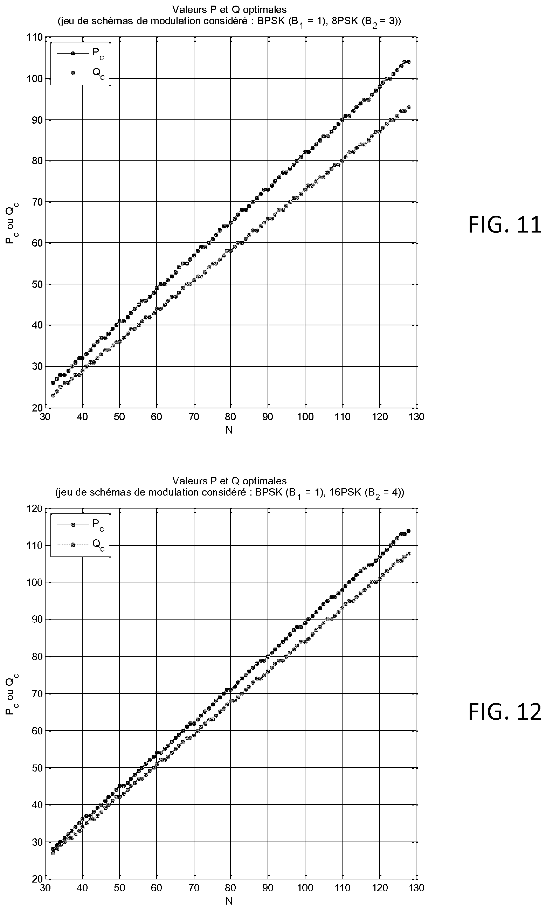

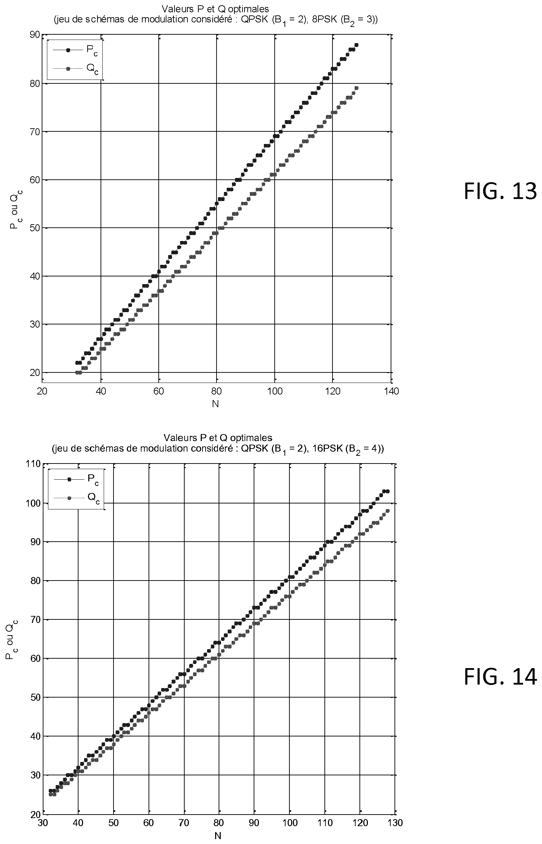

- Les figures 11 à 14 montrent chacune deux courbes de valeurs optimales pour des paramètres P et Q utilisés au cours de la mise en œuvre d'un procédé d'émission/de réception selon quatre modes de réalisation différents.

Sur l'ensemble des figures, les éléments similaires portent des références identiques.

## DESCRIPTION DETAILLEE DE L'INVENTION

### Système de communication de signaux OFDM

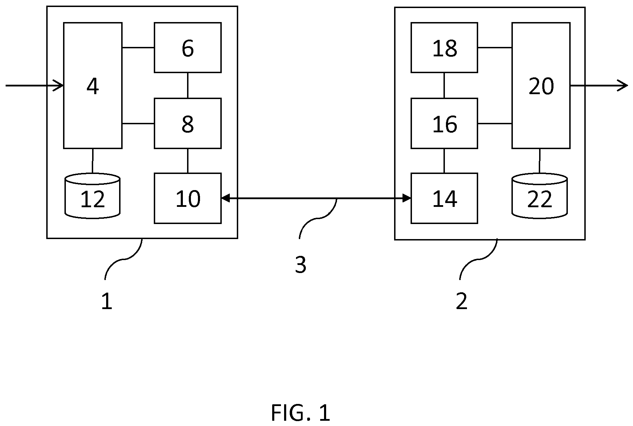

En référence à la **figure 1,** un système de communication comprend un émetteur 1, un récepteur 2, et un canal de communication de données 3 depuis l'émetteur 1 vers le récepteur 2.

L'émetteur 1 de signal OFDM comprend un module de codage 4, un générateur 6 de sous-porteuses, un modulateur 8 et une antenne 10.

Le générateur 6 de sous-porteuses est configuré pour générer une pluralité de sous-porteuses ayant des fréquences différentes.

Le modulateur 8 est par ailleurs configuré pour moduler chaque sous-porteuse, c'est-à-dire appliquer à chaque sous-porteuse un schéma de modulation.

L'antenne 10 est configurée pour émettre l'ensemble des sous-porteuses générées par le générateur 6, le cas échéant modulées par le modulateur 8.

Le module de codage 4 de données comprend au moins une entrée pour recevoir des données d'entrée à coder dans un tel signal OFDM.

Le module de codage 4 de données comprend par exemple au moins un processeur.

Le module de codage 4 de données est configuré pour fournir au générateur 6 de sous-porteuses les paramètres suivants pour une sous-porteuses à générer : une fréquence et au moins un autre paramètre représentatif d'une caractéristique physique de signal (seront détaillés dans la suite des exemples pour ce ou ces autre (s) paramètres).

Le module de codage 4 de donnés peut par ailleurs être configuré pour fournir au modulateur 8 un identifiant d'un schéma de modulation à appliquer à une sous-porteuse générée par le générateur 6 de sous-porteuses, si le modulateur 8 est destiné à appliquer plus d'un schéma de modulation.

Le module de codage 4 de données est par ailleurs configuré pour fournir au modulateur 8 une partie des données d'entrée à faire transporter par une sous-porteuse modulée d'après un schéma de modulation donné.

L'émetteur 1 comprend par ailleurs une mémoire 12 dans laquelle sont mémorisées les données suivantes :

- un ensemble E de M valeurs de fréquences destinées à être utilisées pour estimer le canal de transmission 3 (les phases portées par ces sous-porteuses sont connues par le récepteur 2),

- un ensemble F de N valeurs de fréquences $\{f_0, ..., f_{N-1}\}$ destinées à être utilisées pour le transport de données dans des sous-porteuses modulées
- un entier P tel que : $0 < P < N,$
- un entier Q tel que : $0 < Q \leq P,$
- le cas échéant, un identifiant d'un premier schéma de modulation, et un identifiant d'un deuxième schéma de modulation.

Par ailleurs, le récepteur 2 de signal OFDM comprend une antenne 14, un module de détection 16, un démodulateur 18 et un module de décodage 20.

Le récepteur 2 comprend par ailleurs une mémoire 22 dans laquelle sont mémorisés les mêmes paramètres que ceux mémorisés dans la mémoire de l'émetteur 1. Le récepteur 2 a notamment connaissance des N fréquences de l'ensemble F susceptibles d'avoir été utilisées dans un signal OFDM émis par l'émetteur 1 pour transporter des données.

L'antenne 14 est configurée pour capter un signal OFDM émis par l'émetteur 1 dans le canal de transmission 3.

Le module de détection 16 de fréquences est configuré pour distinguer les premières sous-porteuses des deuxièmes sous-porteuses contenues dans un signal OFDM reçu. Il se fonde pour cela sur une caractéristique physique des sous-porteuses qui est discriminante. Son fonctionnement sera décrit plus en détail dans la suite.

Le démodulateur 18 est configuré pour démoduler une sous-porteuse préalablement modulée avec un certain schéma de modulation. Le démodulateur 18 a pour fonction d'extraire des données qui ont été transportées par l'application de ce schéma de modulation à cette sous-porteuse.

Le module de décodage 20 a pour fonction de décoder des données préalablement codées dans un signal OFDM. Il comprend par exemple au moins un processeur.

Bien entendu, l'un ou l'autre des dispositifs 1 ou 2 peut cumuler les fonctions d'émetteur et de récepteur. Dans ce cas, les mémoires 12 et 22 d'un tel dispositif émetteur/récepteur peuvent être les mêmes, de même que les modules de codage 4 et de décodage 20, et que les antennes 10 et 14.

## Procédé de codage de données dans un signal OFDM

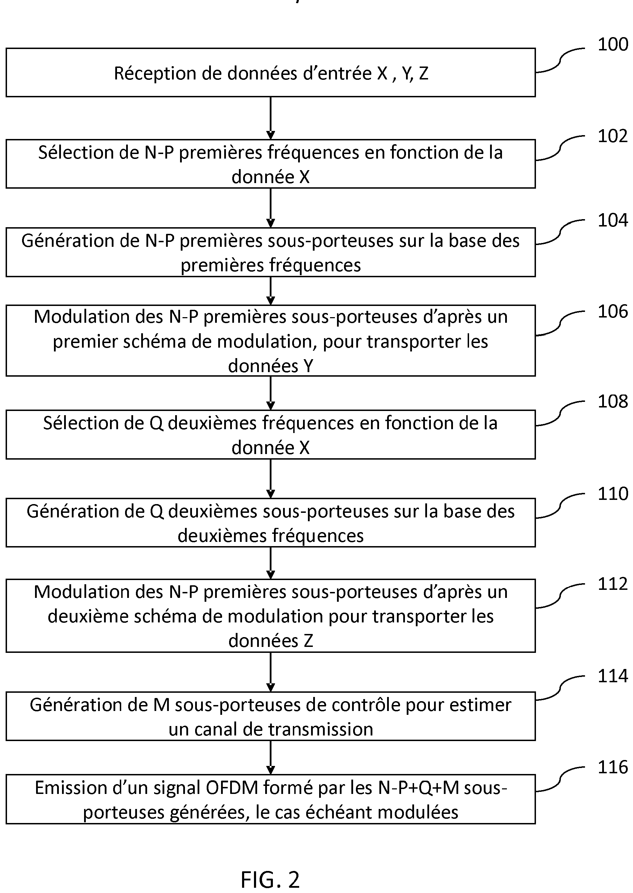

En référence à la **figure 2,** un procédé de codage de données dans un signal OFDM mis en œuvre par l'émetteur 1 comprend les étapes générales suivantes.

Le module de codage 4 reçoit plusieurs données d'entrées à coder (étape 100). Les données d'entrée comprennent notamment une première donnée X, des deuxièmes données Y, voire des troisièmes données Z. Le module de codage 4 est configuré pour séparer ces différentes données à l'aide de moyens connus. Alternativement, le module de codage 4 reçoit ces données par des entrées différentes.

Chaque donnée est typiquement une séquence binaire, ou en tout cas peut être représentée par une telle séquence binaire.

Le module de codage 4 sélectionne un jeu de N-P premières fréquences parmi les N fréquences mémorisées dans la mémoire 12 (étape 102). Par convention, dans le présent texte, on considère qu'un « jeu » de fréquences peut comprendre une seule fréquence ou plusieurs fréquences.

La sélection du jeu de N-P premières fréquences est mise en œuvre en fonction de la première donnée X.

Pour chaque première fréquence, le générateur 6 génère une sous-porteuse à la première fréquence (étape 104). Autrement dit, le générateur 6 génère N-P sous-porteuses ayant chacune l'une des N-P premières fréquences sélectionnées. Ces N-P sous-porteuses générées sont appelées par convention « premières » sous-porteuses.

Le module de codage 4 envoie au modulateur 8 les N-P deuxièmes données Y.

Le module de codage 4 envoie par ailleurs au modulateur 8 un identifiant d'un premier schéma de modulation prédéterminé.

Le modulateur 8 applique le premier schéma de modulation à chacune des N-P premières sous-porteuses de façon à faire transporter les deuxièmes données Y par les N-P sous-porteuses modulées avec ce premier schéma de modulation (étape 106). Cette étape 106 est connue de l'homme du métier.

Le premier schéma de modulation appartient à la famille des schémas de modulation par changement de phase (PSK). Il est caractérisé par un ordre B1, qui peut être défini comme le nombre de bits porté par un symbole du premier schéma de modulation.

Le premier schéma de modulation est ainsi par exemple BSPK (ordre 2), QPSK (ordre 4) ou 8PSK (ordre 8), 16PSK (ordre 16), 32PSK (ordre 32), 64PSK (ordre 64).

Par ailleurs, le module de codage 4 sélectionne, parmi les P fréquences restantes de l'ensemble F prédéterminé de N fréquences, un jeu de Q fréquences, dites deuxièmes fréquences dans la suite (étape 108). Le jeu de deuxièmes fréquences est distinct du jeu de premières fréquences en ce sens que chaque deuxième fréquence est différente de chaque première fréquence. Cette sélection 108 est faite en fonction de la première donnée X d'entrée, comme cela était le cas de la sélection 102.

La combinaison des deux jeux de fréquences sélectionnés dans les étapes 102 et 108 représente un codage de la première donnée X. Par exemple, il est fait en sorte que la combinaison des deux jeux sélectionnés et la valeur de la première donnée X soient liées par une relation biunivoque : chaque valeur particulière de la première donnée X est associé à une combinaison unique de N-P premières fréquences et de Q deuxièmes fréquences.

Les étapes de sélection 102 et 108 peuvent être mises en œuvre séquentiellement ou simultanément par le module de codage 4.

Le module de codage 4 envoie au générateur 6 de sous-porteuses les Q valeurs de deuxièmes fréquences qu'il a sélectionnées.

Pour chaque deuxième fréquence, le générateur 6 génère une sous-porteuse à la deuxième fréquence (étape 110). Autrement dit, le générateur 6 génère Q sous-porteuses ayant chacune l'une des Q deuxièmes fréquences sélectionnées. Ces Q sous-porteuses générées sont appelées par convention « deuxièmes » sous-porteuses.

Les Q deuxièmes sous-porteuses peuvent ne pas faire l'objet d'une modulation par le modulateur 8.

Alternativement, les troisièmes données Z vont être avantageusement transportées par les deuxièmes sous-porteuses, et ce en même temps que les données d'entrée X et Y. Pour ce faire, le module de codage 4 envoie au modulateur 8 les troisièmes données Z et un identifiant d'un deuxième schéma de modulation prédéterminé. Le modulateur 8 applique le deuxième schéma de modulation à chacune des Q deuxièmes sous-porteuses de façon à faire transporter les troisièmes données Z par les Q deuxièmes sous-porteuses modulées avec ce deuxième schéma de modulation. Soit B2 le nombre de bits porté par un symbole du premier schéma de modulation (ordre du deuxième schéma de modulation).

Le deuxième schéma de modulation optionnellement utilisé appartient à la famille PSK. Le deuxième schéma de modulation est ainsi par exemple BSPK (ordre 2), QPSK (ordre 4) ou 8PSK (ordre 8), 16PSK (ordre 16), 32PSK (ordre 32), 64PSK (ordre 64).

Le deuxième schéma de modulation peut être identique ou différent du premier schéma de modulation.

Chaque deuxième sous-porteuse (modulée ou non) présente au moins une caractéristique physique, autre que sa fréquence, qui est adaptée pour distinguer la deuxième sous-porteuse de chaque première sous-porteuse.

Diverses caractéristiques physiques permettant de différencier les premières et les deuxièmes sous-porteuses peuvent être utilisées. Des exemples de telles caractéristiques physiques seront plus amplement détaillés plus loin.

En outre, le générateur 6 de sous-porteuses génère M sous-porteuses de contrôle dont les fréquences appartiennent à l'ensemble de M valeurs mémorisées dans la mémoire 12, de manière conforme à l'état de la technique.

Les étapes de génération de sous-porteuses 104, 110, 114 sont mises en œuvre en parallèle ou bien séquentiellement.

L'antenne 10 émet au final un signal OFDM constitué des N-P premières sous-porteuses modulées d'après le premier schéma de modulation des Q deuxièmes sous-porteuses, le cas échéant modulées d'après le deuxième schéma de modulation, et des M sous-porteuses de contrôle (étape 116).

On définit R comme le nombre de fréquences de l'ensemble F non utilisées. On a donc :

$$P = Q + R.$$

Lorsque Q < P, on a R > 0. Il existe dans ce cas au moins une fréquence de l'ensemble prédéterminé F des N fréquences mutuellement orthogonales qui n'est pas utilisée pour produire le signal OFDM. Par convention, chaque fréquence non utilisée de l'ensemble F est appelée troisième fréquence.

Comme indiqué précédemment la première donnée X d'entrée peut être représentée par une séquence de bits.

Dans le cas où l'on choisit R = 0, les N fréquences sont toutes utilisées. Il existe alors $C_N^P = C_N^Q$ manières de partitionner l'ensemble F de N fréquences en le jeu de premières fréquences et le jeu de deuxièmes fréquences. Il existe alors $C_N^P$ valeurs différentes de la première donnée X d'entrée qui peuvent codées par des sélections différentes des P premières fréquences. Autrement dit, une sélection particulière des N-P premières fréquences peut être reliée de manière biunivoque avec une première donnée X d'entrée ayant une représentation binaire dont le nombre de bits est au plus égal à la partie entière de $\log_2 C_N^P$.

Dans le cas où l'on choisit R > 0, le signal OFDM se caractérise alors par le jeu des premières fréquences, le jeu de deuxièmes fréquences, et par un jeu de troisièmes fréquences non utilisées dans le signal OFDM. Le nombre de manières de répartir les N fréquences de l'ensemble F dans ces trois jeux est bien supérieur à $C_N^P$. Par conséquent, il est possible de coder dans le signal OFDM une première donnée X d'entrée dont la représentation binaire est plus grande que $\log_2 C_N^P$.

**Procédé de décodage de données préalablement codées dans un signal OFDM**

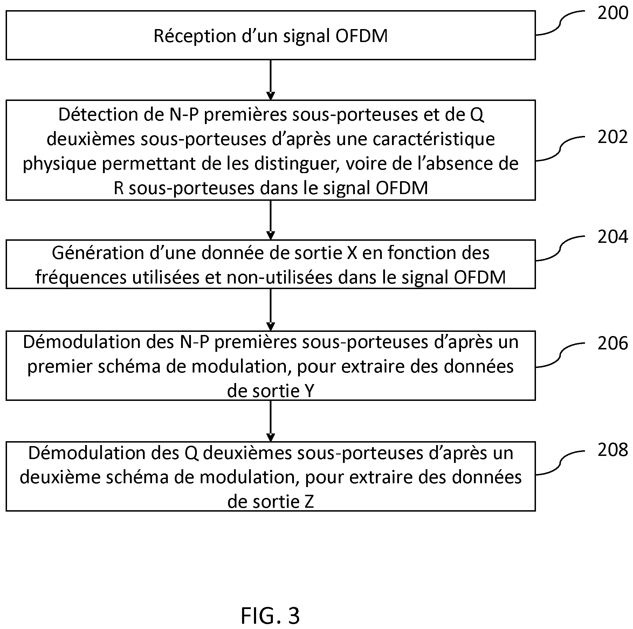

En référence à la **figure 3,** un procédé mis en œuvre par le récepteur 2 comprend les étapes suivantes.

L'antenne 14 du récepteur 2 capte le signal OFDM émis par l'antenne 10 de l'émetteur 1 (étape 200).

Le signal OFDM est transmis par l'antenne 14 au module de détection 16.

Le module de détection 16 détecte, dans le signal OFDM reçu les N-P premières sous-porteuses ayant été modulées d'après le premier schéma de modulation, et les Q deuxièmes sous-porteuses (étape 202).

Pour faire la différence entre les premières sous-porteuses et les deuxièmes sous-porteuses, le module de détection 16 se fonde sur la caractéristique physique de chaque deuxième sous-porteuse, autre que sa fréquence, qui permet de la distinguer de chaque première sous-porteuse.

Le module de détection 16 récupère le jeu de N-P premières fréquences à partir des premières sous-porteuses détectées, et le jeu de Q deuxièmes fréquences à partir des deuxièmes sous-porteuses détectées.

Il est beaucoup plus facile pour le récepteur 2 de se fonder sur une caractéristique physique de porteuse pour déterminer si une sous-porteuse est une première sous-porteuse ou non, plutôt que de se fonder sur une absence de signal comme cela est proposé dans le procédé décrit dans le document WO2014184285.

Comme cela a été vu précédemment, il se peut qu'au moins une des N fréquences n'ait pas été utilisée pour générer le signal OFDM coté émetteur 1 (lorsque l'émetteur 1 a été configuré avec un paramètre R > 0).

Aussi, le module de détection 16 détecte l'absence éventuelle d'une sous-porteuse en au moins une troisième fréquence de l'ensemble F. Par exemple, le module de détection peut se fonder sur sa pré-connaissance du paramètre R mémorisé dans sa mémoire 22, également utilisé par l'émetteur 1.

Sur la base des premières fréquences, des deuxièmes fréquences, et le cas échéant des troisièmes fréquences absentes du signal OFDM reçu, le module de décodage 20 génère une première donnée de sortie (étape 204). Pour ce faire, une transformation inverse de celle utilisée par le module de codage est mise en oeuvre par le module de décodage 20. Par conséquent, la première donnée de sortie est de valeur égale à la première donnée X d'entrée initialement traitée par l'émetteur 1, sous l'hypothèse que le module de détection 16 n'a pas commis d'erreur de discrimination entre les premières sous-porteuses et des deuxièmes sous-porteuses.

Par ailleurs, et ce de manière conventionnelle, le démodulateur 18 démodule chaque première sous-porteuse détectée d'après le premier schéma de modulation, de sorte à extraire des deuxièmes données de sortie (étape 206). Sous l'hypothèse que les premières sous-porteuses modulées n'ont pas été altérées par le canal de communication 3, ces deuxièmes données de sorties sont égales aux deuxièmes données Y d'entrée.

Le cas échéant, le démodulateur 18 démodule chaque deuxième sous-porteuse détectée d'après le deuxième schéma de modulation, de sorte à extraire des troisièmes données de sortie (étape 208). Sous l'hypothèse que les deuxièmes sous-porteuses modulées n'ont pas été altérées par le canal de communication 3, ces troisièmes données Z de sortie sont égales aux troisièmes données Z d'entrée. Grâce aux paramètres mémorisés dans sa mémoire 22, le démodulateur 18 sait s'il convient de démoduler ou non les deuxièmes sous-porteuses (celles-ci pouvant n'avoir pas été modulées par l'émetteur 1).

**_Utilisation d'amplitudes différentes pour discriminer les premières et les deuxièmes sous-porteuses d'un signal OFDM_**

Dans un mode de réalisation, une caractéristique physique permettant de distinguer une deuxième sous-porteuse d'une première sous-porteuse est son amplitude.

Les étapes suivantes sont alors mises en œuvre par l'émetteur 1.

Ont été préalablement mémorisées dans la mémoire de l'émetteur 1 une première valeur d'amplitude A1 et au moins une deuxième valeur d'amplitude A2 différente de la première valeur d'amplitude A1. Bien que l'inverse soit possible, on suppose dans la suite que A1 < A2.

Le module de codage 4 transmet au générateur 6 de sous-porteuses la première valeur d'amplitude A1, de sorte que chacune des N-P premières sous-porteuses ait une amplitude égale à la première valeur d'amplitude A1.

Par ailleurs, le module de codage 4 transmet au générateur 6 de sous-porteuses la deuxième valeur d'amplitude A2, de sorte que chacune des Q deuxièmes sous-porteuses ait comme amplitude la deuxième valeur d'amplitude A2.

Les deuxièmes sous-porteuses sont modulées ou non modulées.

Lorsque les deuxièmes sous-porteuses sont modulées d'après le deuxième schéma de modulation, et lorsque le deuxième schéma de modulation est différent du premier schéma de modulation, il est fait en sorte que le deuxième schéma de modulation soit d'ordre inférieur à l'ordre du premier schéma de modulation si la deuxième amplitude est inférieure à la première amplitude. Alternativement, le deuxième schéma de modulation est d'ordre supérieur à l'ordre du premier schéma de modulation, si la deuxième amplitude est supérieure à la première amplitude.

Ces deux variantes permettent avantageusement que les deuxièmes et troisièmes données Z présentent des taux d'erreur binaires (TEB) respectifs sensiblement égaux après transmission du signal OFDM dans un canal gaussien. Par exemple, si l'on utilise les schémas de modulation suivants (sans l'ajout de codage de canal afin de simplifier le raisonnement) : QPSK (ordre inférieur) et 8PSK (ordre supérieur) et l'on s'impose un TEB égal à $10^{-6}$ alors les valeurs Eb/N0 requises sont respectivement de 10,5 et de 14,0 dB. On peut alors constater que, en dehors de toute notion de seuil, l'amplitude A2 des sous-porteuses associées au schéma de modulation supérieur doit être 1,5 fois plus grande que l'amplitude A1 associée au schéma de modulation inférieur afin que le TEB des deux séries binaires transmises soit identique après démodulation.

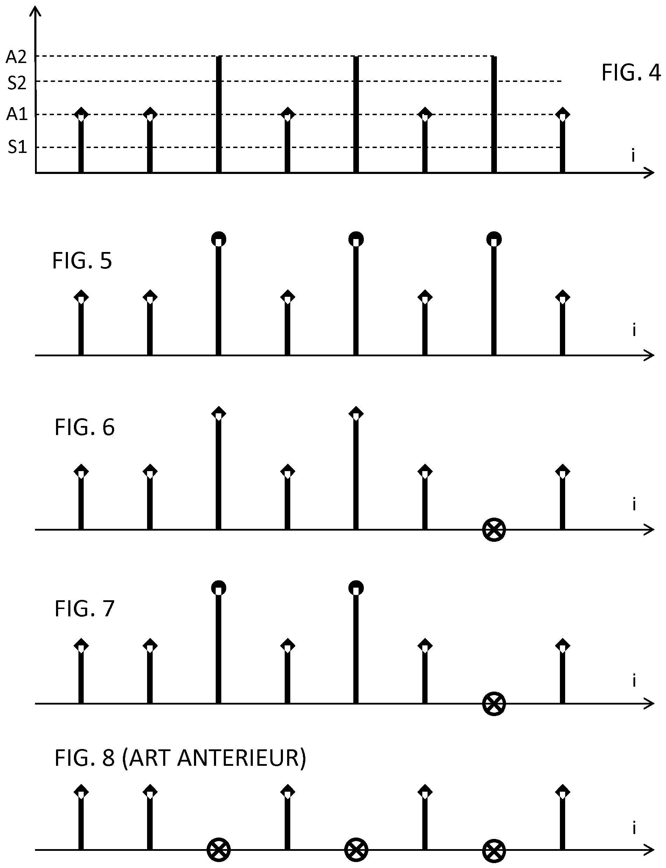

Les **figures 4 à 7** représentent de façon schématique des exemples de signaux OFDM générés par l'émetteur 1. A titre de comparaison, la figure 8 représente un signal OFDM susceptible d'être obtenu par mise en œuvre du procédé décrit dans le document WO2014184285. En abscisse de ces figures, sont représentés les indices i des fréquences $f_i$ de l'ensemble F. Chaque sous-porteuse présente dans un signal OFDM est représentée par un trait vertical. Le schéma de modulation utilisé pour moduler une sous-porteuse est représenté par un motif spécifique à l'extrémité supérieure d'un trait vertical. Lorsqu'une sous-porteuse n'est pas modulée, le trait correspondant ne présente pas de motif en son extrémité supérieure. La hauteur d'un trait est représentative de l'amplitude de la sous-porteuse correspondante. Une sous-porteuse absente dans le signal OFDM à la fréquence $f_i$ est représentée par une croix dans un cercle.

Le signal OFDM de la **figure 4** a été généré sur la base des paramètres suivants : N=8, P=3, Q=3 (donc R=0). Les fréquences d'indice 0, 1, 3, 5, 7 sont utilisées pour générer les premières sous-porteuses ayant la première amplitude A1. Les autres fréquences - d'indice 2, 4, 6 - sont utilisées pour générer les deuxièmes sous-porteuses ayant la deuxième amplitude A2, ici plus grande que la première amplitude. Les deuxièmes sous-porteuses ne sont pas modulées.

Le signal OFDM de la **figure 5** a été généré sur la base des mêmes paramètres, à ceci près que les deuxièmes sous-porteuses ont été modulées à l'aide d'un deuxième schéma de modulation différent du premier schéma de modulation.

Le signal OFDM de la **figure 6** a été généré sur la base des paramètres N=8, P=3, Q=2 (donc R=1). Les deuxièmes sous-porteuses ont été modulées à l'aide d'un deuxième schéma de modulation identique du premier schéma de modulation.

Le signal OFDM de la **figure 7** a été généré sur la base des paramètres N=8, P=3, Q=2 (donc R=1). Les deuxièmes sous-porteuses ont été modulées à l'aide d'un deuxième schéma de modulation différent du premier schéma de modulation.

Le signal OFDM de la **figure 8** a été généré via le procédé décrit dans le document WO2014184285 sur la base des paramètres N=8, P=3.

Les étapes suivantes sont mises en œuvre par le récepteur 2 pour décoder le contenu d'un signal OFDM dans lequel les amplitudes A1 et A2 ont été utilisées.

Ont été préalablement mémorisées dans la mémoire du récepteur 2 un premier seuil S1 et un deuxième seuil S2 de valeurs respectives différentes. Considérons par exemple que $S1 < S2$.

Les seuils sont choisis de telle sorte que l'une des deux valeurs d'amplitudes A1 et A2 soit comprise dans l'intervalle [51,52] et de sorte que l'autre de ces valeurs ne soit pas comprise dans cet intervalle.

Par exemple, comme représenté en figure 4, on a :
$0 < S1 < A1 < S2 < A2$

Dans la mémoire 22, le premier seuil S1 est associé à l'identifiant du premier schéma de modulation. Le cas échéant, le deuxième seuil S2 est associé à l'identifiant du deuxième schéma de modulation.

Pour chaque fréquence donnée $f_i$ parmi les N fréquences de l'ensemble F, le module de détection 16 applique les traitements suivants.

Le module de détection 16 applique un filtrage sélectif en fréquence dans une bande comprenant la fréquence $f_i$ au signal OFDM de sorte à produire une portion du signal OFDM en cette bande. Un tel filtrage est mis en œuvre par un filtre connu de l'état de la technique.

Le module de détection 16 compare cette portion de signal avec au moins un parmi les deux seuils mémorisés. La portion du signal OFDM est retenue comme première sous-porteuse, ou est retenue comme deuxième sous-porteuse en fonction de la ou des deux comparaisons mises en œuvre.

En particulier, la portion du signal OFDM n'est pas considérée être une sous-porteuse lorsque l'amplitude de cette portion est inférieure au plus petit des deux seuils, ici S1.

Les deux comparaisons peuvent être mises l'une après l'autre. Par exemple, le module de détection 16 commence par comparer la portion avec le plus petit des deux seuils, ici S1.

Si l'amplitude de la portion est inférieure à S1, cette portion est considérée être du bruit et non une sous-porteuse. Le module de détection 16 classe donc la fréquence $f_i$ comme une troisième fréquence. Il n'est alors pas mis en œuvre de deuxième comparaison.

Si l'amplitude de la portion est supérieure à S1, le module de détection 16 compare l'amplitude de la portion à l'autre seuil S2.

Si l'amplitude de la portion est inférieure à S2, cette portion est considérée être une première sous-porteuse modulée d'après le premier schéma de modulation. Le module de détection 16 classe donc la fréquence $f_i$ comme une première fréquence.

Si l'amplitude de la portion est supérieure à S2, cette portion est considérée être une deuxième sous-porteuse, le cas échéant modulée d'après le deuxième schéma de modulation. Le module de détection 16 classe donc la fréquence $f_i$ comme une deuxième fréquence.

Les étapes qui précèdent sont répétées pour chacune des N fréquences $f_i$.

L'emploi d'un schéma de modulation appartenant à la famille PSK pour le premier schéma de modulation voire le deuxième schéma de modulation est particulièrement avantageux lorsque l'amplitude est utilisée pour discriminer les premières et deuxièmes fréquences à la réception. En effet, ce type de schéma de modulation est à enveloppe constante (les points de constellation sont uniformément répartis sur un cercle ayant pour centre l'origine du repère orthonormé), ce qui permet de facilement faire un tri entre les N-P premières sous-porteuses et les Q deuxièmes sous-porteuses grâce à leur différence d'amplitude.

### *Autres caractéristiques physiques utilisables pour différencier les premières et deuxièmes sous-porteuses dans le signal OFDM*

Dans un deuxième mode de réalisation, les premières et deuxièmes sous-porteuses sont discriminées d'après leurs composantes.

Le premier schéma de modulation utilisé est dans ce cas BPSK.

Chaque première sous-porteuse générée par le générateur 6 de sous-porteuses comprend deux composantes de signal : une composante en phase, et une composante en quadrature.

En revanche, chaque deuxième sous-porteuse générée par le générateur 6 de sous-porteuses ne comprend qu'une seule composante, par exemple une composante une quadrature uniquement.

Bien entendu, il est possible de cumuler dans un troisième mode de réalisation une discrimination par composantes et une discrimination par amplitude.

### *Gain d'information par rapport à l'art antérieur*

Dans ce qui suit, on compare la quantité d'information transportée par les signaux OFDM suivants :

- un premier signal OFDM, constitué de N sous-porteuses modulées d'après un même schéma de modulation, B1 étant le nombre de bits porté par un symbole de cet schéma de modulation ($P = Q = R = 0$) ;
- un deuxième signal OFDM, obtenu par application du procédé décrit dans le document WO2014184285 et constitué de N-P sous-porteuses modulées d'après un même schéma de modulation, B1 étant le nombre de bits porté par un symbole de ce schéma de modulation ($P > 0$ et $Q = 0$) ;
- un troisième signal OFDM, obtenu par application d'un procédé conforme à l'un des modes de réalisation décrits précédemment, et constitué des P premières sous-porteuses modulées d'après le premier schéma de modulation et des Q deuxièmes sous-porteuses, modulées d'après le deuxième schéma de modulation ($P > 0$ et $0 < Q \leq P$).

Comme cela est exposé dans le document WO2014184285, la quantité d'information supplémentaire transportée par le deuxième signal OFDM par rapport au premier signal OFDM peut être exprimée par le gain d'information $G_{old}$ suivant :

$$G_{old}(P) = \underbrace{B_1(N - P) + \log_2\left(\frac{N!}{P!\,(N-P)!}\right)}_{\text{information transportée par le 2ème signal OFDM}} - \underbrace{B_1 N}_{\substack{\text{information transportée} \\ \text{par le 1er signal OFDM}}} = \log_2\left(\frac{N!}{P!\,(N-P)!}\right) - B_1 P$$

En outre, la quantité d'information supplémentaire transportée par le troisième signal OFDM par rapport au premier signal OFDM peut être exprimée par le gain d'information $G_{new}$ suivant :

$$G_{new}(P,Q) = \underbrace{B_1(N-P) + B_2 Q + \log_2\left(\frac{N!}{Q!\,R!\,(N-P)!}\right)}_{\substack{\text{information transportée}\\ \text{par le 3ème signal OFDM}}} - \underbrace{B_1 N}_{\substack{\text{information transportée}\\ \text{par le 1er signal OFDM}}}$$

$$= \log_2\left(\frac{N!}{Q!\,R!\,(N-P)!}\right) + B_2 Q - B_1 P$$

Dans un mode de réalisation dans lequel on choisit Q = 0 (toutes les fréquences sont utilisées), on a $G_{new}(P,Q)$ = $G_{old}(P)$. Autrement dit, les deuxième et troisième signaux OFDM transportent alors la même quantité d'information. Cependant, il demeure beaucoup plus facile de distinguer une deuxième sous-porteuse qu'un vide laissé par la non-utilisation de P fréquences, côté réception. Par conséquent, le décodage de l'information transportée par le troisième signal OFDM est plus facile à mettre en oeuvre comparativement au deuxième signal de référence, résultant de l'application du procédé décrit dans le document WO2014184285.

Dans un mode de réalisation dans lequel on choisit R > 0, on a $G_{new}(P,Q)$ > $G_{old}(P)$. Autrement dit, le troisième signal transporte alors encore plus d'information que le deuxième signal résultant de l'application du procédé décrit dans le document WO2014184285.

Par exemple, si l'on choisit $Q = R = \dfrac{P}{2}$ on obtient :

$$G_{new}(P) = \log_2\left(\frac{N!}{\left(\left(\frac{P}{2}\right)!\right)^2 (N-P)!}\right) + \left(\frac{B_2}{2} - B_1\right) P$$

La différence de gain entre le deuxième signal OFDM et le troisième signal OFDM est alors la suivante :

$$\Delta G = G_{new}(P) - G_{old}(P)$$

$$= \log_2\left(\frac{N!}{\left(\left(\frac{P}{2}\right)!\right)^2 (N-P)!}\right) + \left(\frac{B_2}{2} - B_1\right) P - \left[\log_2\left(\frac{N!}{P!\,(N-P)!}\right) - B_1 P\right]$$

$$= \log_2\left(\frac{P!}{\left(\left(\frac{P}{2}\right)!\right)^2}\right) + \frac{B_2}{2} P$$

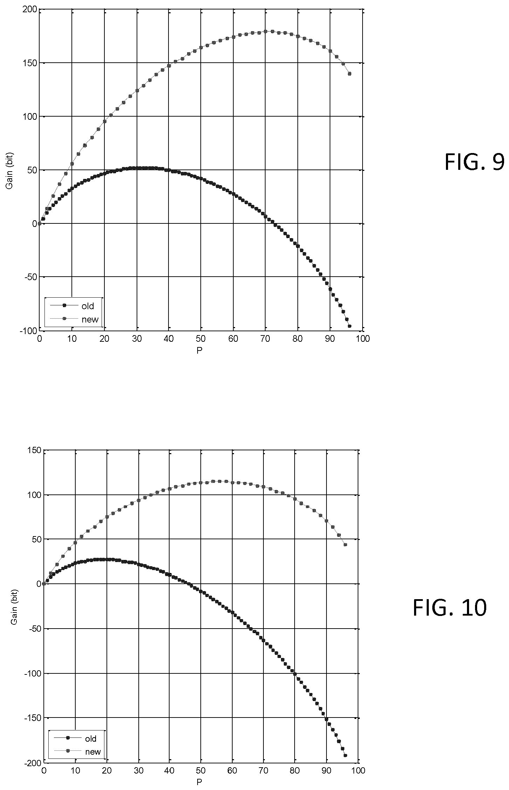

On a représenté en **figure 9** les gains $G_{new}$ et $G_{old}$ en fonction de P, avec les paramètres suivants :

- $N$ = 96,
- $Q = R = \dfrac{P}{2}$,
- schéma de modulation utilisé pour moduler les N-P sous-porteuses du deuxième signal OFDM et pour moduler les N-P premières sous-porteuses du troisième signal OFDM : BPSK,
- schéma de modulation utilisé pour moduler les Q deuxièmes sous-porteuses du troisième signal OFDM : 8PSK.

Avec ces paramètres, le gain $G_{new}$ maximal est d'environ 179 bits pour P = 70.

On a par ailleurs représenté en **figure 10** les gains $G_{new}$ et $G_{old}$ en fonction de P, en remplaçant le schéma BPSK utilisé pour moduler les N-P sous-porteuses du deuxième signal par le schéma QPSK, les autres paramètres étant inchangés par rapport à la figure 8. Avec ces paramètres, le gain $G_{new}$ maximal est d'environ 115 bits pour P = 56.

**Valeurs préférées pour les paramètres P et Q**

Comme indiqué ci-dessus, le gain d'information $G_{new}$ dépend des paramètres P et Q. Puisque P = Q + R, nous pouvons réécrire $G_{new}$ comme suit :

$$G_{new}(P, Q) = \log_2\left(\frac{N!}{Q!\,(P-Q)!\,(N-P)!}\right) + B_2 Q - B_1 P$$
$$= \log_2\left(\frac{\Gamma(N+1)}{\Gamma(Q+1)\Gamma(P-Q+1)\Gamma(N-P+1)}\right) + B_2 Q - B_1 P$$

Où $\Gamma : x \mapsto \int_0^{+\infty} t^{x-1} e^{-t}\, dt, \forall x > 0$ désigne la fonction gamma.

La fonction $G_{new}$ est une fonction à deux variables étant définie sur le domaine triangulaire suivant :

$$\begin{cases} 0 < P < N \\ 0 < Q \leq P \end{cases}$$

La fonction $G_{new}$ admet un point critique ($P_c$, $Q_c$) (extremum) si et seulement si :

$$\begin{cases} \dfrac{\partial G_{new}}{\partial P}(P_c, Q_c) = 0 \\ \dfrac{\partial G_{new}}{\partial Q}(P_c, Q_c) = 0 \end{cases}$$

Calculons les dérivées partielles de $G_{new}$ :

$$\frac{\partial G_{new}}{\partial P}(P, Q) = \frac{\partial}{\partial P}\left(\log_2\left(\frac{\Gamma(N+1)}{\Gamma(Q+1)\Gamma(P-Q+1)\Gamma(N-P+1)}\right)\right) - B_1$$

$$= \frac{1}{\ln 2}\left(\frac{\frac{\partial}{\partial P}\left(\frac{\Gamma(N+1)}{\Gamma(Q+1)\Gamma(P-Q+1)\Gamma(N-P+1)}\right)}{\frac{\Gamma(N+1)}{\Gamma(Q+1)\Gamma(P-Q+1)\Gamma(N-P+1)}}\right) - B_1$$

$$= \frac{1}{\ln 2}\left(\frac{\frac{\partial}{\partial P}\left(\frac{1}{\Gamma(Q+1)\Gamma(P-Q+1)\Gamma(N-P+1)}\right)}{\frac{1}{\Gamma(Q+1)\Gamma(P-Q+1)\Gamma(N-P+1)}}\right) - B_1$$

$$= \frac{1}{\ln 2}\left(\frac{\dfrac{-\left(\frac{\partial}{\partial P}\left(\Gamma(P-Q+1)\right)\Gamma(N-P+1) + \Gamma(P-Q+1)\frac{\partial}{\partial P}\left(\Gamma(N-P+1)\right)\right)}{\Gamma(Q+1)\left(\Gamma(P-Q+1)\Gamma(N-P+1)\right)^2}}{\dfrac{1}{\Gamma(Q+1)\Gamma(P-Q+1)\Gamma(N-P+1)}}\right) - B_1$$

$$= \frac{1}{\ln 2}\left(\frac{-\left(\frac{\partial}{\partial P}\left(\Gamma(P-Q+1)\right)\Gamma(N-P+1) + \Gamma(P-Q+1)\frac{\partial}{\partial P}\left(\Gamma(N-P+1)\right)\right)}{\Gamma(P-Q+1)\Gamma(N-P+1)}\right) - B_1$$

$$= \frac{1}{\ln 2}\left(\frac{\Gamma(P-Q+1)\Gamma(N-P+1)\psi(N-P+1) - \Gamma(P-Q+1)\psi(P-Q+1)\Gamma(N-P+1)}{\Gamma(P-Q+1)\Gamma(N-P+1)}\right)$$
$$- B_1$$

$$= \frac{1}{\ln 2}\left(\frac{\Gamma(P-Q+1)\Gamma(N-P+1)\big(\psi(N-P+1)-\psi(P-Q+1)\big)}{\Gamma(P-Q+1)\Gamma(N-P+1)}\right) - B_1$$

$$= \frac{1}{\ln 2}\big(\psi(N-P+1)-\psi(P-Q+1)\big) - B_1$$

Où $\psi: x \mapsto \frac{\Gamma'(x)}{\Gamma(x)}, \forall x > 0$ désigne la fonction digamma.

$$\frac{\partial G_{new}}{\partial Q}(P,Q) = \frac{\partial}{\partial Q}\left(\log_2\left(\frac{\Gamma(N+1)}{\Gamma(Q+1)\Gamma(P-Q+1)\Gamma(N-P+1)}\right)\right) + B_2$$

$$= \frac{1}{\ln 2}\left(\frac{\frac{\partial}{\partial Q}\left(\frac{\Gamma(N+1)}{\Gamma(Q+1)\Gamma(P-Q+1)\Gamma(N-P+1)}\right)}{\frac{\Gamma(N+1)}{\Gamma(Q+1)\Gamma(P-Q+1)\Gamma(N-P+1)}}\right) + B_2$$

$$= \frac{1}{\ln 2}\left(\frac{\frac{\partial}{\partial Q}\left(\frac{1}{\Gamma(Q+1)\Gamma(P-Q+1)\Gamma(N-P+1)}\right)}{\frac{1}{\Gamma(Q+1)\Gamma(P-Q+1)\Gamma(N-P+1)}}\right) + B_2$$

$$= \frac{1}{\ln 2}\left(\frac{-\frac{\left(\frac{\partial}{\partial Q}(\Gamma(Q+1))\Gamma(P-Q+1)+\Gamma(Q+1)\frac{\partial}{\partial Q}(\Gamma(P-Q+1))\right)}{\left(\Gamma(Q+1)\Gamma(P-Q+1)\right)^2\Gamma(N-P+1)}}{\frac{1}{\Gamma(Q+1)\Gamma(P-Q+1)\Gamma(N-P+1)}}\right) + B_2$$

$$= \frac{1}{\ln 2}\left(\frac{-\left(\frac{\partial}{\partial Q}(\Gamma(Q+1))\Gamma(P-Q+1)+\Gamma(Q+1)\frac{\partial}{\partial Q}(\Gamma(P-Q+1))\right)}{\Gamma(Q+1)\Gamma(P-Q+1)}\right) + B_2$$

$$= \frac{1}{\ln 2}\left(\frac{-\big(\Gamma(Q+1)\psi(Q+1)\Gamma(P-Q+1)-\Gamma(Q+1)\Gamma(P-Q+1)\psi(P-Q+1)\big)}{\Gamma(Q+1)\Gamma(P-Q+1)}\right) + B_2$$

$$= \frac{1}{\ln 2}\big(\psi(P-Q+1)-\psi(Q+1)\big) + B_2$$

Par conséquent, le point critique $(P_c, Q_c)$ est la solution du système d'équations suivant :

$$\begin{cases} \frac{1}{\ln 2}\big(\psi(N-P_c+1)-\psi(P_c-Q_c+1)\big)-B_1 = 0 \\ \frac{1}{\ln 2}\big(\psi(P_c-Q_c+1)-\psi(Q_c+1)\big)+B_2 = 0 \end{cases}$$

Le tableau 1 ci-dessous donne les valeurs de $P_c$ et $Q_c$ (arrondies à l'entier le plus proche) maximisant les gains $G_{old}$ et $G_{new}$ pour des valeurs de N comprises entre 33 et 128, et pour $B1 = 1$ et $B2 = 4$.

**Tableau 1**

| N | $G_{old}$ | $G_{new}$ | | N | $G_{old}$ | $G_{new}$ | | N | $G_{old}$ | $G_{new}$ | | N | $G_{old}$ | $G_{new}$ | |
|---|---|---|---|---|---|---|---|---|---|---|---|---|---|---|---|
| | $P_c$ | $P_c$ | $Q_c$ | | $P_c$ | $P_c$ | $Q_c$ | | $P_c$ | $P_c$ | $Q_c$ | | $P_c$ | $P_c$ | $Q_c$ |
| 32 | 10 | 29 | 28 | 56 | 18 | 50 | 48 | 80 | 26 | 72 | 68 | 104 | 34 | 93 | 88 |
| 33 | 11 | 30 | 29 | 57 | 19 | 51 | 49 | 81 | 27 | 73 | 69 | 105 | 35 | 94 | 89 |

(suite)

| N | $G_{old}$ | $G_{new}$ | | N | $G_{old}$ | $G_{new}$ | | N | $G_{old}$ | $G_{new}$ | | N | $G_{old}$ | $G_{new}$ | |
|---|---|---|---|---|---|---|---|---|---|---|---|---|---|---|---|
| | $P_c$ | $P_c$ | $Q_c$ | | $P_c$ | $P_c$ | $Q_c$ | | $P_c$ | $P_c$ | $Q_c$ | | $P_c$ | $P_c$ | $Q_c$ |
| 34 | 11 | 31 | 29 | 58 | 19 | 53 | 50 | 82 | 27 | 74 | 70 | 106 | 35 | 95 | 90 |
| 35 | 11 | 32 | 30 | 59 | 19 | 53 | 50 | 83 | 27 | 75 | 71 | 107 | 35 | 96 | 91 |
| 36 | 12 | 33 | 31 | 60 | 20 | 54 | 51 | 84 | 28 | 76 | 72 | 108 | 36 | 97 | 92 |
| 37 | 12 | 33 | 32 | 61 | 20 | 55 | 52 | 85 | 28 | 76 | 72 | 109 | 36 | 98 | 93 |
| 38 | 12 | 34 | 33 | 62 | 20 | 56 | 53 | 86 | 28 | 77 | 73 | 110 | 36 | 99 | 93 |
| 39 | 13 | 35 | 34 | 63 | 21 | 57 | 54 | 87 | 29 | 78 | 74 | 111 | 37 | 100 | 94 |
| 40 | 13 | 36 | 34 | 64 | 21 | 58 | 55 | 88 | 29 | 79 | 75 | 112 | 37 | 101 | 95 |
| 41 | 13 | 37 | 35 | 65 | 21 | 59 | 56 | 89 | 29 | 80 | 76 | 113 | 37 | 101 | 96 |
| 42 | 14 | 38 | 36 | 66 | 22 | 59 | 56 | 90 | 30 | 81 | 77 | 114 | 38 | 102 | 97 |
| 43 | 14 | 39 | 37 | 67 | 22 | 60 | 57 | 91 | 30 | 82 | 77 | 115 | 38 | 103 | 98 |
| 44 | 14 | 40 | 38 | 68 | 22 | 61 | 58 | 92 | 30 | 83 | 78 | 116 | 38 | 104 | 98 |
| 45 | 15 | 41 | 39 | 69 | 23 | 62 | 59 | 93 | 31 | 84 | 79 | 117 | 39 | 105 | 99 |
| 46 | 15 | 42 | 40 | 70 | 23 | 63 | 60 | 94 | 31 | 84 | 80 | 118 | 39 | 106 | 100 |
| 47 | 15 | 42 | 40 | 71 | 23 | 64 | 61 | 95 | 31 | 85 | 81 | 119 | 39 | 107 | 101 |
| 48 | 16 | 43 | 41 | 72 | 24 | 65 | 61 | 96 | 32 | 86 | 82 | 120 | 40 | 108 | 102 |
| 49 | 16 | 44 | 42 | 73 | 24 | 66 | 62 | 97 | 32 | 87 | 82 | 121 | 40 | 109 | 103 |
| 50 | 16 | 45 | 43 | 74 | 24 | 67 | 63 | 98 | 32 | 88 | 83 | 122 | 40 | 110 | 104 |
| 51 | 17 | 46 | 44 | 75 | 25 | 67 | 64 | 99 | 33 | 89 | 84 | 123 | 41 | 110 | 104 |
| 52 | 17 | 47 | 45 | 76 | 25 | 68 | 65 | 100 | 33 | 90 | 85 | 124 | 41 | 111 | 105 |
| 53 | 17 | 48 | 45 | 77 | 25 | 69 | 66 | 101 | 33 | 91 | 86 | 125 | 41 | 112 | 106 |
| 54 | 18 | 49 | 46 | 78 | 26 | 70 | 66 | 102 | 34 | 92 | 87 | 126 | 42 | 113 | 107 |
| 55 | 18 | 50 | 47 | 79 | 26 | 71 | 67 | 103 | 34 | 93 | 88 | 127 | 42 | 114 | 108 |
| | | | | | | | | | | | | 128 | 42 | 115 | 109 |

P est sélectionné de préférence dans l'intervalle ]0,$N$[ à une valeur telle que l'écart entre P et $P_c$ est inférieur à un premier seuil prédéterminé égal à $N/N_0$, et Q est par ailleurs sélectionné dans l'intervalle ]0,$N$[ à une valeur telle que l'écart entre Q et $Q_c$ est inférieur à un deuxième seuil déterminé égal à $NP/P_0$. Ces deux contraintes peuvent être exprimées comme suit :

$$|P - P_c| < \frac{N}{N_0}$$
$$|Q - Q_c| < \frac{P}{P_0}$$

De préférence, on choisit $N_0 = 4$.

Très préférentiellement, on combine la sélection $N_0 = 4$ avec une valeur de $P_0$ égale à 4, voir égale à n'importe quelle valeur d'entier allant de 4 à 32. Plus l'on choisit une valeur élevée pour $P_0$, plus la valeur de P utilisée est proche de l'optimum $P_c$.

Dans un mode de réalisation particulier dans lequel un gain d'information maximal est obtenu, P est choisi égal à la partie entière ou à la partie entière par excès de $P_c$, voire Q est choisi égal à la partie entière ou à la partie entière par excès de $Q_c$. Autrement dit, on a :

$$|P - P_c| < 1$$
$$|Q - Q_c| < 1$$

**Revendications**

1. Procédé de codage de données dans un signal OFDM, mis en œuvre par un émetteur, comprenant des étapes de :

 • sélection (102) d'un jeu de premières fréquences dans un ensemble prédéterminé de fréquences mutuellement orthogonales, en fonction de la valeur d'une première donnée (X),
 • pour chaque première fréquence, génération (104) d'une première sous-porteuse à la première fréquence, modulée d'après un premier schéma de modulation pour transporter au moins une deuxième donnée (Y),

 le procédé étant **caractérisé en ce qu'**il comprend des étapes de :

 • sélection (108) d'un jeu de deuxièmes fréquences distinct du jeu de premières fréquences dans l'ensemble prédéterminé, en fonction de la valeur de la première donnée (X), de sorte que la combinaison des premières et deuxièmes fréquences sélectionnées représente un codage de la première donnée (X),
 • pour chaque deuxième fréquence, génération d'une deuxième sous-porteuse à la deuxième fréquence, dans lequel la deuxième sous-porteuse est d'amplitude non-nulle et présente, outre sa fréquence, au moins une autre caractéristique physique adaptée pour distinguer la deuxième sous-porteuse de chaque première sous-porteuse.

2. Procédé selon la revendication précédente, dans lequel au moins une troisième fréquence de l'ensemble prédéterminé n'est pas sélectionnée comme première ou deuxième fréquence, et dans lequel les étapes de sélection (102, 108) sont mises en œuvre de sorte que la combinaison des premières, deuxièmes et troisièmes fréquences représente un codage de la première donnée (X).

3. Procédé selon l'une des revendications précédentes, dans lequel au moins une deuxième sous-porteuse est modulée d'après un deuxième schéma de modulation pour transporter au moins une troisième donnée (Z).

4. Procédé selon la revendication précédente, dans lequel l'ensemble est constitué de N fréquences mutuellement orthogonales, N-P premières fréquences et Q deuxièmes fréquences sont sélectionnées, P et Q étant prédéterminées à des valeurs telles que :

$$0 < P < N$$
$$0 < Q \leq P$$

$$|P - P_c| < \frac{N}{4}$$

où $P_c$ est une composante d'un couple ($P_c$, $Q_c$) formant une solution du système d'équations suivant :

$$\frac{1}{\ln 2}\left(\psi(N - P_c + 1) - \psi(P_c - Q_c + 1)\right) - B_1 = 0$$

$$\frac{1}{\ln 2}\left(\psi(P_c - Q_c + 1) - \psi(Q_c + 1)\right) + B_2 = 0$$

où $\psi$ est la fonction digamma, $B_1$ est l'ordre du premier schéma de modulation et $B_2$ est l'ordre du deuxième schéma de modulation.

**5.** Procédé selon la revendication précédente, dans lequel Q est choisi à une valeur telle que $|Q - Q_c| < \frac{P}{4}$.

**6.** Procédé selon la revendication 3, dans lequel l'ensemble est constitué de N fréquences mutuellement orthogonales, N-P premières fréquences et Q deuxièmes fréquences sont sélectionnées, dans lequel P est choisi à une valeur telle que $|P - P_c| < 1$, dans lequel $P_c$ forme avec une valeur $Q_c$ un couple solution du système d'équations suivant :

$$\frac{1}{\ln 2}\big(\psi(N - P_c + 1) - \psi(P_c - Q_c + 1)\big) - B_1 = 0$$

$$\frac{1}{\ln 2}\big(\psi(P_c - Q_c + 1) - \psi(Q_c + 1)\big) + B_2 = 0$$

où $\psi$ est la fonction digamma, $B_1$ est l'ordre du premier schéma de modulation et $B_2$ est l'ordre du deuxième schéma de modulation.

**7.** Procédé selon la revendication précédente, dans lequel Q est choisi à une valeur telle que $|Q - Q_c| < 1$.

**8.** Procédé selon l'une des revendications précédentes, dans lequel au moins une première sous-porteuse a une première amplitude (A1) et au moins une deuxième sous-porteuse a une deuxième amplitude (A2) différente de la première amplitude (A1).

**9.** Procédé selon la revendication précédente, dans lequel au moins une deuxième sous-porteuse est modulée d'après un deuxième schéma de modulation pour transporter au moins une troisième donnée (Z), et dans lequel :

• le deuxième schéma de modulation est d'ordre inférieur à l'ordre du premier schéma de modulation, et la deuxième amplitude (A2) est inférieure à la première amplitude (A1), ou
• le deuxième schéma de modulation est d'ordre supérieur à l'ordre du premier schéma de modulation, et la deuxième amplitude (A2) est supérieure à la première amplitude (A1).

**10.** Procédé selon l'une des revendications précédentes, dans lequel chaque schéma de modulation utilisé pour moduler une sous-porteuse appartient à la famille des schémas de modulation par changement de phase.

**11.** Procédé selon l'une des revendications précédentes, dans lequel au moins un schéma de modulation utilisé pour moduler une sous-porteuse est BPSK.

**12.** Dispositif de codage de données dans un signal OFDM, le dispositif de codage comprenant :

• un module de codage (4) configuré pour sélectionner (102) un jeu de premières fréquences dans un ensemble prédéterminé de fréquences mutuellement orthogonales, en fonction de la valeur d'une première donnée (X),
• un générateur (6) configuré pour générer, pour chaque première fréquence, (104) une première sous-porteuse à la première fréquence, modulée d'après un premier schéma de modulation pour transporter au moins une deuxième donnée (Y),

le dispositif de codage de données étant **caractérisé en ce que** :

• le module de codage est configuré pour sélectionner (108) un jeu de deuxièmes fréquences distinct du jeu de premières fréquences dans l'ensemble prédéterminé, en fonction de la valeur de la première donnée (X), de sorte que la combinaison des premières et deuxièmes fréquences sélectionnées représente un codage de la première donnée (X),
• le générateur est configuré pour générer, pour chaque deuxième fréquence, une deuxième sous-porteuse à la deuxième fréquence, dans lequel la deuxième sous-porteuse est d'amplitude non-nulle et présente, outre sa fréquence, au moins une autre caractéristique physique adaptée pour distinguer la deuxième sous-porteuse de chaque première sous-porteuse.

**13.** Procédé de décodage de données préalablement codées dans un signal OFDM, mis en œuvre par un récepteur, le procédé comprenant des étapes de

• détection (202) dans le signal OFDM :

◦ d'un jeu de premières sous-porteuses ayant été modulées d'après un premier schéma de modulation, chaque première sous-porteuse ayant une première fréquence sélectionnée dans un ensemble prédéterminé de fréquences mutuellement orthogonales,
◦ d'un jeu de deuxièmes sous-porteuses ayant été générées par un émetteur avec des amplitudes non-nulles, chaque deuxième sous-porteuse ayant une deuxième fréquence sélectionnée dans l'ensemble prédéterminé de fréquences mutuellement orthogonales, et différente de chaque première fréquence, chaque deuxième sous-porteuse présentant, outre sa deuxième fréquence, au moins une autre caractéristique physique adaptée pour distinguer la deuxième sous-porteuse de chaque première sous-porteuse au cours de l'étape de détection,

• génération (204) d'une première donnée (X) en fonction de la combinaison des premières fréquences et des deuxièmes fréquences détectées,
• démodulation (206) des premières sous-porteuses modulées de sorte à extraire au moins une deuxième donnée (Y) transportée par les premières sous-porteuses.

**14.** Procédé selon la revendication 13, dans lequel :

• il est détecté l'absence, dans le signal OFDM, d'une sous-porteuse en au moins une troisième fréquence de l'ensemble prédéterminé,
• la première donnée (X) est générée en fonction de la combinaison des premières, deuxièmes et troisièmes fréquences.

**15.** Procédé selon l'une des revendications 13 à 14, dans lequel au moins une première sous-porteuse a une première amplitude, et au moins une deuxième sous-porteuse a une deuxième amplitude différente de la première amplitude et utilisée pour distinguer la deuxième sous-porteuse de chaque première sous-porteuse au cours de l'étape de détection.

**16.** Procédé selon la revendication précédente, dans lequel l'étape de détection comprend, pour au moins une fréquence de l'ensemble prédéterminé, des sous-étapes de

• application d'un filtrage sélectif en fréquence dans une bande comprenant ladite fréquence au signal OFDM de sorte à produire une portion du signal OFDM en ladite bande,
• comparaison de l'amplitude de la portion du signal OFDM avec au moins un parmi deux seuils prédéterminés différents, dans lequel la portion du signal OFDM est retenue comme première sous-porteuse, ou est retenue comme deuxième sous-porteuse en fonction de la ou des deux comparaisons mises en oeuvre.

**17.** Procédé selon la revendication précédente, dans lequel la portion du signal OFDM n'est pas considérée être une sous-porteuse lorsque l'amplitude de cette portion est inférieure au plus petit des deux seuils prédéterminés.

**18.** Procédé selon l'une des revendications 13 à 17, comprenant en outre une étape de démodulation (208) des deuxièmes sous-porteuses d'après un deuxième schéma de modulation, de sorte à extraire au moins une troisième donnée (Z) transportée par les deuxièmes sous-porteuses.

**19.** Dispositif de décodage de données préalablement codées dans un signal OFDM, le dispositif de décodage comprenant :

• un module de détection (16) configuré pour détecter (202), dans le signal OFDM :

◦ un jeu de premières sous-porteuses ayant été modulées d'après un premier schéma de modulation, chaque première sous-porteuse ayant une première fréquence sélectionnée dans un ensemble prédéterminé de fréquences mutuellement orthogonales,
◦ un jeu de deuxièmes sous-porteuses ayant été générées par un émetteur avec des amplitudes non-nulles, chaque deuxième sous-porteuse ayant une deuxième fréquence sélectionnée dans l'ensemble prédéterminé de fréquences mutuellement orthogonales, et différente de chaque première fréquence, chaque deuxième sous-porteuse étant d'amplitude non-nulle et présentant, outre sa deuxième fréquence, au moins une autre caractéristique physique adaptée pour distinguer la deuxième sous-porteuse de chaque première sous-porteuse au cours de l'étape de détection,

• un module de décodage (20) configuré pour générer (204) une première donnée (X) en fonction de la combinaison des premières fréquences et des deuxièmes fréquences détectées,
• un démodulateur (18) configuré pour démoduler (206) des premières sous-porteuses modulées de sorte à extraire au moins une deuxième donnée (Y) transportée par les premières sous-porteuses.

**Patentansprüche**

1. Kodierungsverfahren von Daten in einem Signal OFDM, das in einem Sender umgesetzt wird, umfassend die Schritte:

   • Auswahl (102) eines Satzes erster Frequenzen in einer vorbestimmten Gruppe von zueinander orthogonalen Frequenzen in Abhängigkeit von dem Wert eines ersten Datenelements (X),
   • für jede erste Frequenz Erzeugung (104) eines ersten Zwischenträgers zur ersten Frequenz, der nach einem ersten Modulationsschema zum Transportieren wenigstens eines zweiten Datenelements (Y) moduliert wird,

   wobei das Verfahren **dadurch gekennzeichnet ist, dass** es die folgenden Schritte umfasst:

   • Auswahl (108) eines Satzes zweiter Frequenzen, der von dem Satz erster Frequenzen in der vorbestimmten Gruppe unterschiedlich ist, in Abhängigkeit von dem Wert des ersten Datenelements (X) derart, dass die Kombination der ersten und der zweiten ausgewählten Frequenz eine Kodierung des ersten Datenelements (X) darstellt;
   • für jede zweite Frequenz Erzeugung eines zweiten Zwischenträgers zur zweiten Frequenz, in der der zweite Zwischenträger eine Amplitude von ungleich Null beträgt und neben seiner Frequenz wenigstens ein weiteres physikalisches Merkmal beträgt, das geeignet ist, um den zweiten Zwischenträger von jedem ersten Zwischenträgers zu unterscheiden.

2. Verfahren gemäß dem voranstehenden Anspruch, bei dem wenigstens eine dritte Frequenz der vorbestimmten Gruppe nicht als erste oder zweite Frequenz ausgewählt wird und bei dem die Auswahlschritte (102, 108) derart ausgewählt werden, dass die Kombination der ersten, der zweiten und der dritten Frequenz eine Kodierung des ersten Datenelements (X) darstellt.

3. Verfahren gemäß einem der voranstehenden Ansprüche, bei dem wenigstens ein zweiter Zwischenträger nach einem zweiten Modulationsschema moduliert wird, um wenigstens ein drittes Datenelement (Z) zu transportieren.

4. Verfahren gemäß dem voranstehenden Anspruch, bei dem die Gruppe aus N zueinander orthogonalen Frequenzen gebildet wird, N-P erste Frequenzen und Q zweite Frequenzen ausgewählt werden, wobei P und Q in Werten vorbestimmt werden, wie z. B.:

$$0 < P < P$$
$$0 < Q \leq P$$
$$|P - P_c| < \frac{N}{4}$$

wobei $P_c$ eine Komponente eines Paars ($P_c$, $Q_c$) ist, das eine Lösung des folgenden Gleichungssystems bildet:

$$\frac{1}{\ln 2}\left(\psi(N - P_c + 1) - \psi(P_c - Q_c + 1)\right) - B_1 = 0$$

$$\frac{1}{\ln 2}\big(\psi(P_c - Q_c + 1) - \psi(Q_c + 1)\big) + B_2 = 0$$

wobei $\psi$ die Funktion Digamma ist, $B_1$ die Ordnung des ersten Modulationsschemas ist und $B_2$ die Ordnung des zweiten Modulationsschemas ist.

5. Verfahren gemäß dem voranstehenden Anspruch, bei dem Q mit einem Wert ausgewählt wird, wie z. B.

$$|Q - Q_c| < \frac{P}{4}.$$

6. Verfahren gemäß Anspruch 3, bei dem die Gruppe aus N zueinander orthogonalen Frequenzen gebildet wird, N-P erste Frequenzen und Q zweite Frequenzen ausgewählt werden, bei dem P mit einem Wert ausgewählt wird wie z. B. $|P - P_c| < 1$, bei dem $P_c$ mit einem Wert $Q_c$ ein Paar bildet, das die Lösung des folgenden Gleichungssystems ist:

$$\frac{1}{\ln 2}\big(\psi(N - P_c + 1) - \psi(P_c - Q_c + 1)\big) - B_1 = 0$$

$$\frac{1}{\ln 2}\big(\psi(P_c - Q_c + 1) - \psi(Q_c + 1)\big) + B_2 = 0$$

wobei $\psi$ die Funktion Digamma ist, $B_1$ die Ordnung des ersten Modulationsschemas ist und $B_2$ die Ordnung des zweiten Modulationsschemas ist.

7. Verfahren gemäß dem voranstehenden Anspruch, bei dem Q mit einem Wert ausgewählt wird, wie z. B. $|Q - Q_c| < 1$.

8. Verfahren gemäß einem der voranstehenden Ansprüche, bei dem wenigstens ein erster Zwischenträger eine erste Amplitude (A1) aufweist und wenigstens ein zweiter Zwischenträger eine zweite Amplitude (A2) aufweist, die von der ersten Amplitude (A1) unterschiedlich ist.

9. Verfahren gemäß dem voranstehenden Anspruch, bei dem wenigstens ein zweiter Zwischenträger nach einem zweiten Modulationsschema moduliert wird, um wenigstens ein drittes Datenelement (Z) zu transportieren und bei dem:

   • das zweite Modulationsschema von kleinerer Ordnung ist als die Ordnung des ersten Modulationsschemas und die zweite Amplitude (A2) kleiner ist als die erste Amplitude (A1) oder
   • das zweite Modulationsschema von einer größeren Ordnung ist als die Ordnung des ersten Modulationsschemas und die zweite Amplitude (A2) größer ist als die erste Amplitude (A1).

10. Verfahren gemäß einem der voranstehenden Ansprüche, bei dem jedes Modulationsschema, das zum Modulieren eines Zwischenträgers verwendet wird, zur Familie der Modulationsschemata per Phasenänderung gehört.

11. Verfahren gemäß einem der voranstehenden Ansprüche, bei dem wenigstens ein Modulationsschema, das zum Modulieren eines Zwischenträgers verwendet wird, BPSK ist.

12. Kodierungsvorrichtung von Daten in einem Signal OFDM, wobei die Kodierungsvorrichtung umfasst:

   • ein Kodierungsmodul (4), das zum Auswählen (102) eines Satzes erster Frequenzen in einer vorbestimmten Gruppe von zueinander orthogonalen Frequenzen in Abhängigkeit vom Wert eines ersten Datenelements (X) ausgestaltet ist,
   • einen Generator (6), der zum Erzeugen (104) eines ersten Zwischenträgers mit der ersten Frequenz, die nach einem ersten Modulationsschema zum Transportieren wenigstens eines zweiten Datenelements (Y) für jede erste Frequenz moduliert ist, ausgestaltet ist,

wobei die Kodierungsvorrichtung von Daten **dadurch gekennzeichnet ist, dass**:

• das Kodierungsmodul zum Auswählen (108) eines Satzes zweiter Frequenzen, der von dem Satz erster Frequenzen in der vorbestimmten Gruppe unterschiedlich ist, in Abhängigkeit von dem Wert des ersten Datenelements (X) derart ausgestaltet ist, dass die Kombination der ersten und der zweiten ausgewählten Frequenz eine Kodierung des ersten Datenelements (X) darstellt,
• der Generator zum Erzeugen eines zweiten Zwischenträgers mit der zweiten Frequenz, in der der zweite Zwischenträger eine Amplitude von ungleich Null hat und neben seiner Frequenz wenigstens ein anderes physikalisches Merkmal aufweist, das geeignet ist, um den zweiten Zwischenträger von jedem ersten Zwischenträger zu unterscheiden, für jede zweite Frequenz ausgestaltet ist.

13. Dekodierungsverfahren von Daten, die zuvor in einem Signal OFDM kodiert werden, das durch einen Empfänger umgesetzt wird, wobei das Verfahren die Schritte umfasst:

• Detektion (202) in dem Signal OFDM:

◦ eines Satzes erster Zwischenträger, die nach einem ersten Modulationsschema moduliert wurden, wobei jeder erste Zwischenträger eine erste Frequenz aufweist, die aus einer vorbestimmten Gruppe von zueinander orthogonalen Frequenzen ausgewählt wird,
◦ eines Satzes zweiter Zwischenträger, die von einem Sender mit Amplituden von ungleich Null erzeugt wurden, wobei jeder zweite Zwischenträger eine zweite Frequenz aufweist, die in der vorbestimmten Gruppe von zueinander orthogonalen Frequenzen ausgewählt wird und die von jeder ersten Frequenz unterschiedlich ist, wobei jeder zweite Zwischenträger neben seiner zweiten Frequenz wenigstens ein weiteres physikalisches Merkmal, das zum Unterscheiden des zweiten Zwischenträgers von jedem ersten Zwischenträger im Verlauf des Detektionsschritts geeignet ist, aufweist,

• Erzeugung (204) eines ersten Datenelements (X) in Abhängigkeit von der Kombination der detektierten ersten Frequenzen und der detektierten zweiten Frequenzen,
• Demodulation (206) der ersten modulierten Zwischenträger derart, dass wenigstens ein zweites Datenelement (Y) extrahiert wird, das von den ersten Zwischenträgern transportiert wird.

14. Verfahren gemäß Anspruch 13, bei dem:

• in dem Signal OFDM das Fehlen eines Zwischenträgers in wenigstens einer dritten Frequenz der vorbestimmten Gruppe detektiert wird,
• das erste Datenelement (X) in Abhängigkeit von der Kombination der ersten, der zweiten und der dritten Frequenz erzeugt wird.

15. Verfahren gemäß einem der Ansprüche 13 bis 14, bei dem wenigstens ein erster Zwischenträger eine erste Amplitude aufweist und wenigstens ein zweiter Zwischenträger eine zweite Amplitude aufweist, die von der ersten Amplitude unterschiedlich ist und im Verlauf des Detektionsschritts zum Unterscheiden des zweiten Zwischenträgers von jedem ersten Zwischenträger verwendet wird.

16. Verfahren gemäß dem voranstehenden Anspruch, bei dem der Detektionsschritt für wenigstens eine Frequenz der vorbestimmten Gruppe Unterschritte umfasst:

• der Anwendung eines in der Frequenz selektiven Filters in einem Band, umfassend die genannte Frequenz mit dem Signal OFDM derart, dass ein Abschnitt des Signals OFDM in dem genannten Band produziert wird,
• des Vergleichs der Amplitude des Abschnitts des Signals OFDM mit wenigstens einem von zwei unterschiedlichen, vorbestimmten Schwellenwerten, beim der der Abschnitt des Signals OFDM als erster Zwischenträger festgehalten wird oder als zweiter Zwischenträger in Abhängigkeit von dem oder den zwei umgesetzten Vergleich(en) festgehalten wird.

17. Verfahren gemäß dem voranstehenden Anspruch, bei dem der Abschnitt des Signals OFDM nicht als ein Zwischenträger gilt, wenn die Amplitude dieses Abschnitts kleiner ist als der kleinste der zwei vorbestimmten Schwellenwerte.

18. Verfahren gemäß einem der Ansprüche 13 bis 17, umfassend darüber hinaus einen Demodulationsschritt (208) der zweiten Zwischenträger nach einem zweiten Modulationsschema derart, dass wenigstens ein drittes Datenelement (Z), das von den zweiten Zwischenträgern transportiert wird, extrahiert wird.

19. Dekodierungsvorrichtung von zuvor kodierten Daten in einem Signal OFDM, wobei die Dekodierungsvorrichtung umfasst:

• ein Detektionsmodul (16), das zum Detektieren (202) in dem Signal OFDM ausgestaltet ist:

◦ eines Satzes erster Zwischenträger, die nach einem ersten Modulationsschema moduliert wurden, wobei jeder erste Zwischenträger eine erste Frequenz aufweist, die aus einer vorbestimmten Gruppe von zueinander orthogonalen Frequenzen ausgewählt wird,
◦ eines Satzes zweiter Zwischenträger, die von einem Sender mit Amplituden von ungleich Null erzeugt wurden, wobei jeder zweite Zwischenträger eine zweite Frequenz aufweist, die in der vorbestimmten Gruppe von zueinander orthogonalen Frequenzen ausgewählt wird und die von jeder ersten Frequenz unterschiedlich ist, wobei jeder zweite Zwischenträger eine Amplitude von ungleich Null aufweist und neben seiner zweiten Frequenz wenigstens ein weiteres physikalisches Merkmal zum Unterscheiden des zweiten Zwischenträgers von jedem ersten Zwischenträger im Verlauf des Detektionsschritts aufweist,

• ein Dekodierungsmoduls (20), das zum Erzeugen (204) eines ersten Datenelements (X) in Abhängigkeit von der Kombination der detektierten ersten Frequenzen und der detektierten zweiten Frequenzen ausgestaltet ist,
• einen Demodulator (18), der zum Demodulieren (206) der ersten modulierten Zwischenträger derart ausgestaltet ist, dass wenigstens ein zweites Datenelement (Y) extrahiert wird, das von den ersten Zwischenträgern transportiert wird.

## Claims

1. Method for coding data in an OFDM signal, implemented by an emitter, comprising steps of:

• selection (102) of a collection of first frequencies in a predetermined set of mutually orthogonal frequencies, as a function of the value of a first datum (X),
• for each first frequency, generation (104) of a first sub-carrier at the first frequency, modulated in accordance with a first modulation scheme to transport at least one second datum (Y),

the method being **characterised in that** it comprises steps of:

• selection (108) of a collection of second frequencies distinct from the collection of first frequencies in the predetermined set, as a function of the value of the first datum (X), so that the combination of the first and second selected frequencies represents a coding of the first datum (X),
• for each second frequency, generation of a second sub-carrier at the second frequency, wherein the second sub-carrier is of non-zero amplitude and has, in addition to its frequency, at least one other physical characteristic adapted to distinguish the second sub-carrier from each first sub-carrier.

2. Method according to the preceding claim, wherein at least one third frequency of the predetermined collection is not selected as first or second frequency, and wherein the steps of selection (102, 108) are implemented so that the combination of the first, second and third frequencies represents a coding of the first datum (X).

3. Method according to one of the preceding claims, wherein at least one second sub-carrier is modulated in accordance with a second modulation scheme to transport at least one third datum (Z).

4. Method according to the preceding claim, wherein the collection is comprised of N mutually orthogonal frequencies, N-P first frequencies and Q second frequencies are selected, P and Q being predetermined at values such that:

$$0 < P < N$$
$$0 < Q \leq P$$
$$|P - P_c| < \frac{N}{4}$$

where $P_c$ is a component of a pair $(P_c, Q_c)$ forming a solution of the following system of equations:

$$\frac{1}{\ln 2} \; (\psi(N \; - \; P_c \; + \; 1) \; - \; \psi(P_c \; - \; Q_c \; + \; 1)) \; - \; B_1 \; = \; 0$$

$$\frac{1}{\ln 2} \; (\psi(P_c \; - \; Q_c \; + \; 1) \; - \; \psi(Q_c \; + \; 1)) \; + \; B_2 \; = \; 0$$

where $\psi$ is the digamma function, $B_1$ is the order of the first modulation scheme and $B_2$ is the order of the second modulation scheme.

5. Method according to the preceding claim, wherein Q is chosen at a value such that $|Q \; - \; Q_c| \; < \; \frac{P}{4}.$

6. Method according to claim 3, wherein the collection is comprised of N mutually orthogonal frequencies, N-P first frequencies and Q second frequencies are selected, wherein P is chosen at a value such that | P - $P_c$ | < 1, wherein $P_c$ forms with a value $Q_c$ a pair solution of the following system of equations:

$$\frac{1}{\ln 2} \; (\psi(N \; - \; P_c \; + \; 1) \; - \; \psi(P_c \; - \; Q_c \; + \; 1)) \; - \; B_1 \; = \; 0$$

$$\frac{1}{\ln 2} \; (\psi(P_c \; - \; Q_c \; + \; 1) \; - \; \psi(Q_c \; + \; 1)) \; + \; B_2 \; = \; 0$$

where $\psi$ is the digamma function, $B_1$ is the order of the first modulation scheme and $B_2$ is the order of the second modulation scheme.

7. Method according to the preceding claim, wherein Q is chosen at a value such that $|Q - Q_c| < 1$.

8. Method according to one of the preceding claims, wherein at least one first sub-carrier has a first amplitude (A1) and at least one second sub-carrier has a second amplitude (A2) different from the first amplitude (A1).

9. Method according to the preceding claim, wherein at least one second sub-carrier is modulated in accordance with a second modulation scheme to transport at least one third datum (Z), and wherein:

  • the second modulation scheme is of an order less than the order of the first modulation scheme, and the second amplitude (A2) is less than the first amplitude (A1), or
  • the second modulation scheme is of an order greater than the order of the first modulation scheme, and the second amplitude (A2) is greater than the first amplitude (A1).

10. Method according to one of the preceding claims, wherein each modulation scheme used to modulate a sub-carrier belongs to the family of modulation schemes by phase change.

11. Method according to one of the preceding claims, wherein at least one modulation scheme used to modulate a sub-carrier is BPSK.

12. Device for coding data in an OFDM signal, the device for coding comprising

  • a module for coding (4) configured to select (102) a collection of first frequencies in a predetermined set of mutually orthogonal frequencies, as a function of the value of a first datum (X),
  • a generator (6) configured to generate, for each first frequency, (104) a first sub-carrier at the first frequency, modulated in accordance with a first modulation scheme to transport at least one second datum (Y),

  the device for coding data being **characterised in that**:

  • the module for coding is configured to select (108) a collection of second frequencies distinct from the collection of first frequencies in the predetermined set, as a function of the value of the first datum (X), so that the combination of the first and second selected frequencies represents a coding of the first datum (X),

• the generator is configured to generate, for each second frequency, a second sub-carrier at the second frequency, wherein the second sub-carrier is of non-zero amplitude and has, in addition to its frequency, at least one other physical characteristic adapted to distinguish the second sub-carrier from each first sub-carrier.

13. Method for decoding data coded beforehand in an OFDM signal, implemented by a receiver, the method comprising the steps of

• detection (202) in the OFDM signal:

◦ of a collection of first sub-carriers having been modulated in accordance with a first modulation scheme, each first sub-carrier having a first frequency selected in a predetermined set of mutually orthogonal frequencies,
◦ of a collection of second sub-carriers having been generated by an emitter with non-zero amplitudes, each second sub-carrier having a second frequency selected in the predetermined set of mutually orthogonal frequencies, and different from each first frequency, each second sub-carrier exhibiting, in addition to its second frequency, at least one other physical characteristic adapted to distinguish the second sub-carrier from each first sub-carrier during the step of detection,

• generation (204) of a first datum (X) as a function of the combination of the first frequencies and of the second frequencies detected,
• demodulation (206) of the first sub-carriers modulated so as to extract at least one second datum (Y) transported by the first sub-carriers.

14. Method according to claim 13, wherein:

• the absence, in the OFDM signal, of a sub-carrier is detected in at least one third frequency of the predetermined collection,
• the first datum (X) is generated according to the combination of the first, second and third frequencies.

15. Method according to one of claims 13 to 14, wherein at least one first sub-carrier has a first amplitude, and at least one second sub-carrier has a second amplitude different from the first amplitude and used to distinguish the second sub-carrier from each first sub-carrier during the step of detection.

16. Method according to the preceding claim, wherein the step of detection comprises, for at least one frequency of the predetermined set, sub-steps of

• applying a frequency-selective filtering in a band comprising said frequency to the OFDM signal so as to produce a portion of the OFDM signal in said band,
• comparing the amplitude of the portion of the OFDM signal with at least one among two different predetermined thresholds, wherein the portion of the OFDM signal is retained as first sub-carrier, or is retained as second sub-carrier according to the or both comparisons implemented.

17. Method according to the preceding claim, wherein the portion of the OFDM signal is not considered to be a sub-carrier when the amplitude of this portion is less than the smallest of the two predetermined thresholds.

18. Method according to one of claims 13 to 17, further comprising a step of demodulation (208) of the second sub-carriers in accordance with a second modulation scheme, so as to extract at least one third datum (Z) transported by the second sub-carriers.

19. Device for decoding data coded beforehand in an OFDM signal, the device for decoding comprising:

• a module for detecting (16) configured to detect (202), in the OFDM signal:

◦ a collection of first sub-carriers having been modulated in accordance with a first modulation scheme, each first sub-carrier having a first frequency selected in a predetermined set of mutually orthogonal frequencies,
◦ a collection of second sub-carriers having been generated by an emitter with non-zero amplitudes, each second sub-carrier having a second frequency selected in the predetermined set of mutually orthogonal frequencies, and different from each first frequency, each second sub-carrier being of non-zero amplitude and exhibiting, in addition to its second frequency, at least one other physical characteristic adapted to distinguish the second sub-carrier from each first sub-carrier during the step of detection,

• a module for decoding (20) configured to generate (204) a first datum (X) as a function of the combination of the first frequencies and of the second frequencies detected,
• a demodulator (18) configured to demodulate (206) first modulated sub-carriers so as to extract at least one second datum (Y) transported by the first sub-carriers.

FIG. 1

.

| Réception de données d'entrée X , Y, Z | 100 |

↓

| Sélection de N-P premières fréquences en fonction de la donnée X | 102 |

↓

| Génération de N-P premières sous-porteuses sur la base des premières fréquences | 104 |

↓

| Modulation des N-P premières sous-porteuses d'après un premier schéma de modulation, pour transporter les données Y | 106 |

↓

| Sélection de Q deuxièmes fréquences en fonction de la donnée X | 108 |

↓

| Génération de Q deuxièmes sous-porteuses sur la base des deuxièmes fréquences | 110 |

↓

| Modulation des N-P premières sous-porteuses d'après un deuxième schéma de modulation pour transporter les données Z | 112 |

↓

| Génération de M sous-porteuses de contrôle pour estimer un canal de transmission | 114 |

↓

| Emission d'un signal OFDM formé par les N-P+Q+M sous-porteuses générées, le cas échéant modulées | 116 |

FIG. 2

| Réception d'un signal OFDM | 200 |

↓

| Détection de N-P premières sous-porteuses et de Q deuxièmes sous-porteuses d'après une caractéristique physique permettant de les distinguer, voire de l'absence de R sous-porteuses dans le signal OFDM | 202 |

↓

| Génération d'une donnée de sortie X en fonction des fréquences utilisées et non-utilisées dans le signal OFDM | 204 |

↓

| Démodulation des N-P premières sous-porteuses d'après un premier schéma de modulation, pour extraire des données de sortie Y | 206 |

↓

| Démodulation des Q deuxièmes sous-porteuses d'après un deuxième schéma de modulation, pour extraire des données de sortie Z | 208 |

FIG. 3

FIG. 4

FIG. 5

FIG. 6

FIG. 7

FIG. 8 (ART ANTERIEUR)

FIG. 9

FIG. 10

Valeurs P et Q optimales
(jeu de schémas de modulation considéré : BPSK (B$_1$ = 1), 8PSK (B$_2$ = 3))

FIG. 11

Valeurs P et Q optimales
(jeu de schémas de modulation considéré : BPSK (B$_1$ = 1), 16PSK (B$_2$ = 4))

FIG. 12

Valeurs P et Q optimales
(jeu de schémas de modulation considéré : QPSK ($B_1 = 2$), 8PSK ($B_2 = 3$))

FIG. 13

Valeurs P et Q optimales
(jeu de schémas de modulation considéré : QPSK ($B_1 = 2$), 16PSK ($B_2 = 4$))

FIG. 14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014184285 A

- WO 2016186544 A